# NEUE EUROPÄISCHE PATENTSCHRIFT

(11) **EP 2 234 940 B2**
(45) Veröffentlichungstag und Bekanntmachung des Hinweises auf die Entscheidung über den Einspruch: **22.08.2018**
(45) Hinweis auf die Patenterteilung: 20.03.2013
(21) Anmeldenummer: 09728906.0
(22) Anmeldetag: 13.01.2009
(51) Int. Cl.: C04B 111/10, B28B 1/50, B28B 11/14, B28B 15/00, C04B 28/18, C04B 38/02

(54) **VERFAHREN ZUR HERSTELLUNG VON PORENBETON UND SCHAUMBETON SOWIE ANLAGE ZUR DURCHFÜHRUNG DES VERFAHRENS**
PROCESS FOR THE PRODUCTION OF AERATED CONCRETE AND FOAMED CONCRETE, AND SYSTEM FOR CARRYING OUT THE PROCESS
PROCÉDÉ DE FABRICATION DE BÉTON POREUX ET DE BÉTON MOUSSE, ET INSTALLATION POUR LA MISE EN UVRE DU PROCÉDÉ

(30) Priorität: 04.04.2008 DE 102008017251
(43) Veröffentlichungstag der Anmeldung: 06.10.2010
(73) Patentinhaber: Xella Technologie- und Forschungsgesellschaft mbH, 14797 Kloster Lehnin (DE)
(72) Erfinder: STUMM, Andreas, 14473 Potsdam (DE)
(74) Vertreter: Patent- und Rechtsanwälte Dr. Solf & Zapf
(86) Internationale Anmeldenummer: PCT/EP2009/050312
(87) Internationale Veröffentlichungsnummer: WO 2009/121635

(56) Entgegenhaltungen:
- EP-A- 1 892 226
- WO-A-98/02391
- WO-A1-2007/088111
- AT-B- 177 713
- CH-A- 263 596
- DE-A1- 2 043 081
- DE-A1- 2 060 106
- DE-A1- 2 601 681
- DE-A1- 2 601 683
- DE-A1- 3 537 265
- DE-A1- 10 041 368
- DE-A1- 10 042 627
- DE-A1- 19 525 073
- DE-A1- 19 933 298
- DE-A1-102005 033 454
- DE-B4- 10 066 270
- DE-B4- 10 131 360
- DE-B4- 10 232 180
- DE-C- 454 744
- DE-C1- 19 931 898
- DE-T2- 69 701 091
- DE-U1-202004 019 019
- JP-A- H04 142 902
- US-A- 3 470 005
- GRUNDLACH H.: 'Dampfgehärtete Baustoffe', 01 Januar 1973, BAUVERLAG GMBH, WIESBADEN Seiten 206 - 228
- 'BFT Betonwerk+Fertigteiltechnik, Concrete Plant+Precast Technology' BFT Bd. BD.72, Nr. 12, 01 Januar 2006, Seiten 68 - 74
- 'BFT Betonwerk+Fertigteil Technik, Concrete plant+precast technology. "New developments in the AAC production process"' BFT Bd. BD. 73, Nr. 4, 01 Januar 2007, Seiten 48 - 58
- VAN BOGGELEN W.M.: 'Autoclaved Aerated Concrete "Developments and opportunities of AAC with modern production technology"', 31 Januar 2005, TAYLOR & FRANCIS GROUP, LONDON Seiten 11 - 21
- KITTEL H.: 'Lehrbuch der Lacke und Beschichtungen', 01 Januar 2007, S. HIRZEL VERLAG, STUTTGART Seiten 284 - 298
- REUL H.: 'Handbuch Bauchemie', 01 Januar 1991, VERLAG FÜR CHEMISCHE INDUSTRIE, AUGSBURG Seiten 266 - 267
- "Anlagenkonglomerat" Hess AAC"
- REINSDORF S.: 'Leichtbeton', 01 Januar 1963, VEB VERLAG FÜR BAUWESEN, BERLIN
- BÖRNER H.: 'Ytong, der Leichtkalkbeton, seine Eigenschaften und Erzeugung' TONINDUSTRIE ZEITUNG Bd. BD. 75, 01 Januar 1951, Seiten 99 - 111

## Beschreibung

Die Erfindung betrifft ein Verfahren zur Herstellung von sulfatfreiem Porenbeton und Schaumbeton genormter Güteklassen bezüglich Festigkeit und Rohdichte nach EN 771-4 und DIN V 4165-100 mit Rohdichte ≤ 450 kg/m³.

Derzeit wird Porenbeton genormter Güteklassen (EN 771-4 und DIN V 4165-100) mit Rohdichte ≤ 500 kg/m³ ausnahmslos mit sogenannten Zementrezepturen hergestellt. Dabei wird eine gießfähige Masse aus gebranntem Kalk, meist Feinkalk, insbesondere Weißfeinkalk, Zement, meist Portlandzement, Quarzmehl oder Quarzsand oder einer entsprechenden in einem Hydrothermalprozess reaktionsfähigen SiO₂-Komponente, Gips und/oder Anhydrit, Aluminiumpulver oder Aluminiumpaste und Wasser zusammengemischt und in eine Form gegossen. In der Form treibt die Masse auf und steift zu einem sogenannten Kuchen an. Nach dem Ansteifen wird die in Form eines großformatigen Blocks von z. B. 6 m Länge, 1,2 m Breite und 0,7 m Höhe vorliegende Masse en bloc in Formkörper geschnitten und die geschnittenen Formkörper en bloc in einen Autoklaven gebracht, in dem die Masse hydrothermal behandelt wird. Dabei erhärtet das Formkörpermaterial unter Bildung von Calciumsilikathydratphasen, insbesondere in Form von Tobermorit, zum Porenbeton. Nach Beendigung der Autoklavbehandlung werden die erhärteten Formkörper en bloc dem Autoklaven entnommen und in der Regel verpackt.

Dieses Verfahren auf der Basis von Zementrezepturen mit Gipszusatz ist nach jahrzehntelangen Entwicklungen und Optimierungen entstanden aus ursprünglich reinen Kalkrezepturen, die lediglich Branntkalk als im Hydrothermalprozess reagierende CaO-Komponente sowie eine SiO₂-Komponente und eine Aluminiumkomponente sowie Wasser aufwiesen. Dieses Material wurde in flache etwa 30 cm hohe Formen gegossen und in denselben autoklaviert. Die Treibhöhe betrug dabei ebenfalls etwa 30 cm. An Stelle von Sand wurden vorwiegend Flugaschen und Ölschiefer verwendet, die beide puzzolanisch aktiv sind. Es hat sich beim Übergang zu Treibhöhen von mehr als 50 cm jedoch gezeigt, dass das Ablöschverhalten des Kalks nicht beherrschbar war und die Festigkeiten und das Schwindverhalten ungenügend waren, weshalb zusätzlich Zement und später auch Gips bzw. Anhydrit eingesetzt wurden (z. B. AT-PS 17 77 13, DE 27 39 188 C2, DE-A-27 39 181). Analog wird derzeit auch Schaumbeton ausschließlich unter Verwendung von Zement hergestellt.

Bezüglich der Kalkrezepturen ist bekannt, dass Rezepturen mit Hartbranntkalk oder hydraulischem Kalk verwendbar und stand- und schnittfest angesteifte Massen bzw. Kuchen herstellbar sind, dass aber die Festigkeiten nach der Autoklavierung des nunmehr erhärteten Porenbetons relativ gering sind und die Struktur bezüglich der Porenverteilung und der Calciumsilikathydratphasenbildung in einem Formkörper inhomogen ist. Außerdem lassen sich nur Porenbetone und Schaumbetone mit Rohdichten über 500 kg/m³ mit ausreichenden Festigkeiten herstellen. Aus diesen Gründen mussten die Zementrezepturen entwickelt werden, die Gips sowohl als Bestandteil des Zements als auch in Form eines separaten Gips- oder Anhydritzusatzes enthalten.

Die Zementrezepturen haben jedoch schwerwiegende Nachteile die in Kauf genommen wurden. Durch den Gipszusatz kann es zu Kalkvergrießungen in der gießfähigen Masse kommen, deren negative Auswirkungen bekannt sind. Mitunter entstehen außerdem sogenannte graue Flecke, Zeichen für eine ungleichmäßige Tobermoritbildung im Stein, so dass die Festigkeit beeinträchtigt wird. Die Zementqualitäten schwanken häufig, so dass Rezepturanpassungen erforderlich werden. Bei der Herstellung von Porenbeton wird der sogenannte Rückschlamm aus der eigenen Produktion in die Rezeptur eingebracht. Die mineralogische Zusammensetzung des Rückschlamms ist nicht konstant, weil sich Calciumsilikathydratphasen aus dem Zement in unterschiedlichen Mengen gebildet haben. Dies hat Auswirkungen auf die Calciumsilikathydratphasenbildung im Ansteifungs- und Autoklavprozess.

Zudem ist die Kantenbruchfestigkeit der Porenbetonformkörper aus Zementrezepturen teilweise mangelhaft, weil das Porenbetonmaterial aus Zementrezepturen relativ spröde ist.

Der wesentlichste Nachteil des Poren- und Schaumbetonmaterials auf Zementrezepturbasis aber ist, dass es Sulfat aus dem Zement und dem Anhydrit-/Gipszusatz der Ausgangsmischung aufweist. Das Sulfat ist auslaugbar. Dies erschwert das Recycling von Baustellenabfällen und Abbruchmaterial aus Porenbeton, weil der Sulfat-Grenzwert zum Einsatz im Landschaftsbau nicht eingehalten wird. Sulfationen können unter bestimmten Bedingungen während der Bauwerkserstellung mit Calciumsilikathydratphasen des verwendeten mineralischen Mörtels reagieren und Thaumasit bilden (CaSiO₃ x CaSO₄ x CaCO₃ x 15 H₂O). Diese Thaumasitbildung zerstört durch mit Volumenvergrößerungen einhergehende Kristallisation den Baustoffverbund. Einzig wirksame Gegenmaßnahme ist der Test und die Beschränkung der verwendeten Mörtel und Putze auf ihre Thaumasitbildung.

In der DE 20 43 081 A1 ist ein Verfahren zur Herstellung von vorzugsweise dampfhärtenden Bauelementen beschrieben, bei dem die bekannten Probleme im Zusammenhang mit dem Transport hochkant stehender Gießkörper vermieden werden. Bei dem Verfahren wird eine bauelementbildende Masse in eine Gießform gegossen, die in Gießlage mit ihrer Großfläche in der Hauptachse horizontal ausgerichtet ist. Nach dem Abbinden der Masse wird die Gießform mit dem darin befindlichen Gießkörper geschwenkt, dass die Großfläche quer zur Gießlage ausgerichtet ist. In dieser Position werden Teile der Gießform entfernt und der Gießkörper in ein oder mehrere Bauelemente aufgeteilt. Wesentlich ist, dass der Gießkörper bzw. die Bauelemente nach der Aufteilung von den zuvor entfernten Teilen der Gießform wieder umschlossen wird und dass die Gießform mit dem Gießkörper anschließend in die Gießlage zurückgekippt wird. In dieser Position erfolgt dann der Transport des in der Gießform befindlichen Gießkörpers zur nächsten Bearbeitungsstation.

Die AT 177 713 B betrifft ein Verfahren zur Herstellung von dampfgehärteten, porösen Kunststeinen, z.B. Gasbeton, bei dem die Gasentwicklung unter für die Porenbildung möglichst günstigen Bedingungen stattfinden soll. Hierzu werden fein gemahlenen Gemischen aus gebranntem, ungelöschtem Kalk, kieselsäurereichen Materialien, Wasser und Metallpulver neben einem Sulfat außerdem noch hydratisierbare bzw. wasserlösliche Silikate wie z.B. Portlandzement oder basische Hochofenschlacke bzw. Wasserglas zugesetzt. Insbesondere wird eine Zusammensetzung aus 700g einer Mischung von 20% Kalk (mit 94% CaO) und 80% gemahlenem Sand (mit 80% SiO₂), 375g Wasser und 0,35g Aluminiumpulver beschrieben. Dieser Zusammensetzung werden vorzugsweise 3,5 Gew.-% Zementklinker bezogen auf die Trockenmasse, 2g Gipsstein und 1-4g Kaliumsulfat oder 2-8g Natriumsulfat beigefügt.

Aufgabe der Erfindung ist, bei sulfatfreien Poren- und Schaumbetonprodukten genormter Güteklassen bezüglich der Festigkeit und der Rohdichte nach EN 771-4 und DIN V 4165-100 die Thaumasitbildung auszuschließen und vorzugsweise auch die Nachteile von Zementrezepturen zu kompensieren.

Diese Aufgabe wird durch ein Verfahren mit den Merkmalen der Ansprüche 1 und 14 gelöst. Vorteilhafte Weiterbildungen der Erfindung werden in den von diesen Ansprüchen abhängigen Unteransprüchen gekennzeichnet.

Was im Folgenden bezüglich Porenbeton offenbart wird, gilt im Wesentlichen auch für Schaumbeton.

Die Erfindung sieht die Verwendung sulfatfreier Kalkrezepturen gemäß Anspruch 1 oder 14 für die Herstellung von Porenbeton vor. Sulfatfreie Branntkalkrezepturen als solche sind zwar bekannt. Die Herstellung von Porenbeton mit den Eigenschaften der derzeit geforderten Güteklassen bezüglich Rohdichte und Festigkeiten (EN 771-4 und DIN V 4165-100) ist aber noch nicht gelungen. Vielmehr sind die Güteklassen nur mit Zementrezepturen, die für eine optimale Tobermoritbildung auch Gips enthalten müssen, gewährleistbar.

Bekannt ist in diesem Zusammenhang auch, den Zement durch hydraulischen Kalk zu ergänzen oder zu ersetzen. Dabei geht man aber davon aus, dass auch in diesem Fall Gips zur Gewährleistung der Gütemerkmale verwendet werden muss (AT-PS 17 77 13).

Im Rahmen der Erfindung wurde erkannt, dass es bei Kalkrezepturen für die Herstellung von Porenbeton der genormten Güteklassen nach EN 771-4 und DIN V 4165-100 mit Rohdichte ≤ 450, insbesondere 400 kg/m³ nicht auf die angesteifte, schneidfähige Konsistenz des Kuchens ankommt, die mit Kalkrezepturen ohne weiteres gewährleistbar ist, sondern auf den Wassergehalt des Kuchens bevor er in den Autoklaven gefahren wird. Es hat sich nach umfangreicher Ursachenforschung gezeigt, dass die Struktur des großformatigen Kuchens aus Kalkrezepturen trotz relativ geringen Gewichts labil ist und sich im Autoklaven bei der Hydrothermalhärtung nachteilig verändert, indem das im Kuchen vorhandene Wasser von oben nach unten sickert und sich im unteren Bereich des Kuchens ansammelt. Der obere Bereich des Kuchens trocknet aus und die Masse des unteren Bereichs wird mit Wasser angereichert und aufgrund der Auflast derart labil, dass der Kuchen kollabieren kann. Zumindest aber wird die Struktur so stark verändert, dass keine Formkörper der geforderten Güteklassen mit homogener Struktur erzeugbar sind.

Für die Lösung des Problems sieht die Erfindung Maßnahmen zur Immobilisierung des Wassers im Kuchen während des Hydrothermalprozesses vor.

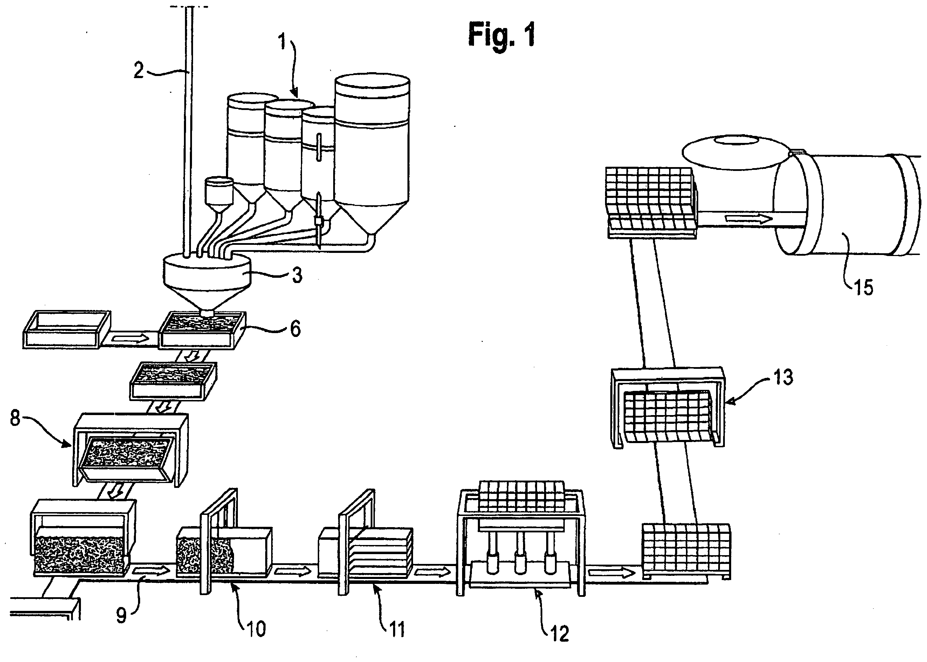

Dies geschieht nach einer Ausführungsform der Erfindung durch mechanische Verfahrensmaßnahmen, die im folgenden anhand der Fig. 1 und 2a bis 2d beschrieben werden. Dabei zeigen:
Fig. 1 schematisch das erfindungsgemäße Verfahren zur Herstellung von Porenbeton in einem Fließbild;
Fig. 2 die Verfahrensschritte des Kippens des Kuchens.

Aus Vorratsbehältern 1, in denen sulfatfreie Komponenten für Kalkrezepturen zur Herstellung von Porenbeton bevorratet werden, werden die Bestandteile einer Kalkrezeptur einem Mischer 3 aufgegeben, dem über die Wasserleitung 2 Wasser zugeführt wird. Die Bestandteile sind mindestens eine im Hydrothermalprozess reaktionsfähige CaO-Komponente, wie Branntkalk oder hydraulischer Kalk, mindestens eine im Hydrothermalprozess reaktionsfähige SiO₂-Komponente, wie Quarzmehl oder Quarzsand, und Aluminiumpulver oder Aluminiumpaste. Wahlweise kann der Rezeptur noch eine im Autoklavprozess inerte Füllstoffkomponente wie z.B. Kalksteinmehl beigegeben werden.

Des Weiteren muss die Rezeptur Porenbetonmehl aus der Produktion enthalten. Zudem können Zusatzmittel wie Fließmittel, Wasserrückhaltemittel und/oder mindestens eine mit der CaO-Komponente z. B. puzzolanisch reagierende, feinstteilige weitere SiO₂-Zusatzkomponente aufweisen. Die feinstteilige weitere SiO₂-Zusatzkomponente bildet bereits ohne Hydrothermalbedingungen und/oder im Hydrothermalprozess sehr frühzeitig mit der CaO-Komponente Calciumsilikathydratphasen, bevor die grobe SiO₂-Hauptkomponente (Quarzmehl, Quarzsand) mit der CaO-Komponente reagiert. Außerdem bindet sie aufgrund ihrer hohen Feinteiligkeit freies Wasser adsorptiv.

Insbesondere werden die folgenden zement- und gipsfreien Kalkrezepturen verwendet (Angaben in Gew.-%, bezogen auf die Trockensubstanz der Rezeptur):

| | |
|---|---|
| CaO-Komponente | 15 - 30 |
| SiO₂-Komponente | 55 - 65 |
| inerter Füllstoff | 0 - 20 |
| Porenbetonmehl/ -splitt | 5 - 15 |
| Rohstoffrückschlamm | 15 - 25 |
| Aluminiumkomponente | 1,0 - 1,8 |
| feinstteilige SiO₂-Zusatzkomponente | 0 - 3 |
| Fließmittel | 0 - 1 |
| Wasserrückhaltemittel | 0 - 1 |

Dabei wird das CaO/SiO₂-Molverhältnis der im Hydrothermalprozess reaktionsfähigen Komponenten zwischen 0,15 und 0,95, insbesondere zwischen 0,30 und 0,40 eingestellt und eine fließfähige Masse mit einem Wasser-Feststoff-Verhältnis zwischen 0,45 und 1,35, insbesondere zwischen 0,48 und 0,63 hergestellt. Die Fließfähigkeit kann durch die Zugabe von Fließmitteln und/oder Wasserrückhaltemitteln bei entsprechender Veränderung des Wassergehalts eingestellt werden.

Die Erfindung sieht vor, reine Kalkrezepturen gemäß Anspruch 1 und 14 zu verwenden und physikalisch das Kollabieren zu vermeiden. Der freie Wassergehalt in der angesteiften Masse wird verringert und/oder immobilisiert, indem Porenbetonmehl oder -splitt als Adsorptionsmittel für Wasser eingesetzt wird. Zudem kann der freie Wassergehalt in der angesteiften Masse verringert und/oder immobilisiert werden durch die Verwendung mindestens eines Fließmittels und/oder eines Wasserrückhaltemittels und/oder eines Adsorptionsmittels für Wasser und/oder einen adsorptiv und chemisch Wasser bindenden, die Festigkeit erhöhenden chemisch reagierenden feinstteiligen Zusatzstoff wie feinstteiliges SiO₂ und/oder Vibrieren der Masse während des Gießens und/oder Auftreibens bei geringerem Wassergehalt, wodurch die Struktur des Kuchens im Autoklavprozess durch die Auflast unbeeinträchtigt bleibt.

Als CaO-Komponente wird insbesondere Weißfeinkalk in Form von Weichbranntkalk oder Hartbranntkalk mit CaO-Gehalten über 88, insbesondere zwischen 92 und 96 Gew.-% verwendet. Des Weiteren kann sulfatfreier hydraulischer Kalk als einzige CaO-Komponente oder in Kombination mit Weißfeinkalk verwendet werden, wobei der hydraulische Kalk CaO-Gehalte zwischen 50 und 90, insbesondere zwischen 65 und 85 Gew.-% aufweisen sollte. Ebenso liegt die Verwendung von Kalkhydrat anstelle von Branntkalk oder eine Kombination aus Branntkalk und Kalkydrat im Rahmen der Erfindung.

Die relativ grobe SiO₂-Hauptkomponente ist vornehmlich gemahlener Quarzsand oder Quarzmehl üblicher Feinheit mit normaler Gauss'scher Kornverteilung bis zu Korngrößen von 0,13, insbesondere bis 0,10 mm. Der SiO₂-Gehalt beträgt vorzugsweise über 80, insbesondere über 85 Gew.-%.

Neben gemahlenem Quarzsand oder Quarzmehl kann als SiO₂-Hauptkomponente auch Flugasche verwendet werden. Die gemahlene SiO₂-Komponente liegt vorzugsweise als trockenes Mehl (< 0,1 mm) vor, weil hierdurch die technologische Beeinflussung der Abgusstemperatur durch die Temperatur des dem Mischer zugeführten sogenannten freien Gießwasser besser gesteuert werden kann als bei Verwendung von Sandschlamm. Dennoch liegt die Verwendung von Sandschlamm ebenso im Rahmen der Erfindung wie der Einsatz von Verbundmehl. Verbundmehl besteht in der Regel aus gemeinsam vermahlenem Sand und Kalkkomponente.

Sulfatfreies Porenbetonmaterial in Form von Porenbetonmehl und/oder Porenbetonsplitt wird z. B. mit Feinheiten bis 1,5 mm, insbesondere bis 1,0 mm verwendet. Der sulfatfreie Porenbetonrohmaterialrückschlamm stammt aus der Produktion und wird im Kreislauf gefahren. Rückschlamm ist z. B. Sägeabfall mit Wasser vermischt und pumpfähig.

Als feinstteilige bzw. hochdisperse Kieselsäure (Mikrosilica) wird z. B. eine synthetische Kieselsäure (Winnacker-Küchler, Chemische Technologie, Band 3, Anorganische Technologie II, 4. Aufl., Carl Hauser Verlag München, Wien, 1983, S. 75 - 90) verwendet. Insbesondere werden pyrogene Kieselsäuren, die auf dem Wege einer Flammhydrolyse hergestellt werden, sowie Fällungskieselsäuren verwendet. Fällungskieselsäuren können unvermahlen oder dampfstrahlvermahlen oder sprühgetrocknet oder sprühgetrocknet und vermahlen eingesetzt werden. Derartige Fällungskieselsäuren werden z. B. gehandelt unter der Bezeichnung "DUROSIL" und "SIPERNAT". Die synthetischen Kieselsäuren aus der Flammhydrolyse sind unter der Bezeichnung "AEROSIL" auf dem Markt. Die spezifische Oberfläche dieser synthetischen Kieselsäuren sollte z. B. über 10 m²/g nach BET und zwischen 20 und 50 m²/g betragen. Bei Verwendung von hochdispersen Kieselsäuren mit höheren Oberflächen z. B. 100 - 500 m²/g reduziert sich die benötigte Einsatzmenge.

Die Aluminiumkomponente wird entweder als Aluminiumpulver oder Aluminiumpaste eingebracht.

Als Fließmittel kann z. B. Verflüssiger aus der Betonindustrie auf Basis von Melaminsulfonaten, Naphthalinsulfonaten, Polycarboxylatethern oder Ligninsulfonaten verwendet werden. Diese werden beschrieben z. B. im Internet unter "Admixture News, Nr. 1 - Januar 2008, BASF Construction Chemicals Europe AG".

Wirksame Wasserrückhaltemittel sind z. B. Stärke oder Zelluloseether.

Die Mischungsbestandteile werden im Mischer 3, wie üblich, zu einer gießfähigen Masse gemischt und die gießfähige Masse in eine großvolumige, oben offene Gießform 6 aus Metall mit quaderförmigem Innenraum abgefüllt. Die Abmessungen des Innenraums betragen z. B.: Länge 6,0 m, Breite 1,2 m, Höhe 0,7 m.

Die Gießform 6 weist einen Formenboden und zwei den Formenboden umgebende Seitenwände sowie zwei den Formenboden umgebende Stirnwände auf. Die Seiten- und die Stirnwände sind vom Formenboden abnehmbar. In der Gießform 6 treibt die Masse auf und steift zu einem selbsttragenden, schnittfesten grünen Porenbetonkuchen an. Nach dem Ansteifen wird die Gießform 6 in einer ersten Kippeinrichtung 8 auf eine der Seitenwände gekippt und somit hochkant gestellt, so dass der Kuchen auf einer Schmalseite auf der Seitenwand stehend ebenfalls hochkant gestellt ist. Die andere Seitenwand sowie der Boden und die Stirnwände der Gießform 6 werden entfernt. Von der Kippeinrichtung 8 wird der hochkant stehende auf der Seitenwand der Gießform lagernde Kuchen in eine Transportlinie 9 befördert und mit einer Stirnseite voran in eine erste Schneidstation 10 verbracht, in der mit vertikalen Schneiddrähten die Boden- und die Deckschicht des Kuchens von vorne nach hinten abgeschnitten werden. Danach wird der Kuchen in eine zweite Schneidstation 11 mit horizontalen quer zur Längserstreckung des Kuchens gespannten Schneiddrähten befördert, in der horizontale Schnitte von vorne nach hinten ausgeführt werden. Im Anschluss daran gelangt der Kuchen in eine dritte Schneidstation 12 (Quersäge), die mindestens einen vorzugsweise horizontal sich quer im 90°-Winkel zur Längsrichtung des Kuchens erstreckenden, gespannten Schneiddraht aufweist, in der der Kuchen von oben nach unten geschnitten wird.

Erfindungswesentlich ist, dass der Kuchen nach den Schneidprozessen in einer Hochkantstellung einer zweiten Kippeinrichtung 13 zugeführt wird, in der der hochkant stehende Kuchen an einer seiner Breitseiten mit einem Härterost kombiniert und anschließend mit dem Härterost auf seine Breitseite gekippt wird. In dieser Lage wird der Kuchen mit dem Härterost in einen Autoklaven 15 gefahren, in dem wie üblich hydrothermal gehärtet wird.

Durch das Zurückkippen auf die Breitseite wird in nicht erfindungsgemäßer Weise erreicht, dass bei reinen Kalkrezepturen auch ohne Zusatzmittel und ohne Zusatzstoffe und ohne Vibration die Auflast des Kuchens so gering bleibt, dass so viel Wasser im Kuchen immobilisiert bleibt, dass die zur Herstellung eines Porenbetons mit Rohdichte ≤ 400 kg/m³ und mit den geforderten Güteklassen entsprechenden Struktur des Kuchens erhalten bleibt. Durch die relativ geringe Auflast im Vergleich zu einer Auflast eines hochkant stehenden Kuchens sickert das Wasser nicht in solchen Mengen nach unten, dass der Kuchen kollabiert. Vielmehr können sulfatfreie Formsteine aus Porenbeton mit Rohdichten ≤ 400 kg/m³ und mit den geforderten Güteklasseeigenschaften hergestellt werden, die denen aus Zementrezepturen hergestellten Porenbetonen entsprechen.

Ohne Zusatzmittel und ohne Zusatzstoffe und ohne zu vibrieren können Kuchenhöhen bis 0,75, insbesondere bis 0,70 m ohne weiteres beschädigungsfrei autoklaviert werden. Sollen höhere Kuchen autoklaviert werden, kann beim Gießen der Masse, die weniger Wasser als für die erforderliche Gießfähigkeit benötigte Menge aufweist, vibriert werden und/oder der Rezeptur ein Fließmittel zugegeben werden und/oder insbesondere, wenn die gießfähige Masse normale Wassermengen für das Gießen aufweisen soll, Wasserrückhaltemittel und/oder hochdisperse Kieselsäure beigegeben werden, womit das Wasser im Kuchen entsprechend immobilisiert wird. Erfindungsgemäß gelingt es, einen Kuchen aus einer Kalkrezeptur gemäß Anspruch 14 sogar hochkant zu autoklavieren, so dass die zweite Kippvorrichtung entfallen kann. Nicht erfindungsgemäß gelingt dies auch mit Kalkrezepturen, die als Zusatzmittel lediglich eine reaktive, hochreine, hochdisperse Kieselsäure, z. B. Mikrosilica in Mengen von 3 bis 15, insbesondere von 5 bis 8 Gew.-%, bezogen auf den CaOH₂-Gehalt des Kalkes aufweist. Der SiO₂-Gehalt der Kieselsäure sollte dabei nicht unter 92 Gew.-% liegen. Die hochdisperse Kieselsäure wird insbesondere mit spezifischen BET-Oberflächen zwischen 20 und 50 m²/g verwendet. Durch eine große spezifische Oberfläche bedingt wird Wasser adsorptiv gebunden und durch chemische Reaktionen Calciumsilikathydratphasen mit der Kalkkomponente gebildet, und zwar schon im grünen Zustand des Kuchens, so dass das Wasser für den Autoklavprozess immobilisiert ist und ein Kollabieren des Kuchens im Autoklaven vermieden werden kann.

Aus der EP 1 892 226 A2 ist bekannt, eine mikro- bzw. nanoporöse Kieselsäure in Form von mikro- bzw. nanoporösen Teilchen einer Porenbetonmischung zuzusetzen. Diese Art der Kieselsäure, die mikro- bzw. nanoporös ist, übersteht den Autoklavprozess schadlos und die Partikel verbleiben in der Grundmatrix, in der sie eingebunden sind. Mit einer derartigen mikro- bzw. nanoporösen Kieselsäure kann die vorliegende Erfindung nicht verwirklicht werden, bei der es darauf ankommt, dass die hochdisperse Kieselsäure puzzolanisch reagiert und Calciumsilikathydratphasen bildet.

Zur besseren Auslastung des Autoklavens können mehrere übereinander gestapelte auf Härterosten liegend lagernde Kuchen gleichzeitig in einem Autoklaven gehärtet werden, wenn die Härteroste im Autoklaven jeweils gesondert abgestützt werden und nicht auf dem darunter befindlichen Kuchen aufsitzen.

Das Autoklavieren von auf Härterosten auf ihrer Breitseite liegenden Kuchen ist z. B. aus der DE-A-21 08 300 oder DE-A-23 07 031 bekannt. Bei diesen bekannten Verfahren wird der Kuchen zum Schneiden vorher vollkommen entschalt und mit Hub- oder Saugvorrichtungen der Schneidvorrichtung zugeführt. Diesen Transport überstehen Kuchen aus Kalkrezepturen wegen ihrer labilen Struktur und Konsistenz nicht. Erst die Kombination eines Schneidverfahrens nach der DE 958 639 B mit einem Kippverfahren auf eine Breitseite des Kuchens entsprechend den beiden oben genannten Offenlegungsschriften nach dem Schneiden ermöglicht die Produktion von Porenbeton aus Porenbetonmehl oder -splitt enthaltenden zement- und sulfatfreien Kalkrezepturen. Dabei stellt der zweite Kippvorgang eine zusätzliche in diesem Zusammenhang nicht naheliegende Maßnahme dar, denn das Zurückkippen beim Stand der Technik erfolgte zur Vermeidung des Zusammenbackens übereinander angeordneter Formkörper beim Autoklavieren oder zum Entfernen der Bodenschicht.

Die in Anspruch 14 angegebene Lösung der erfindungsgemäß gestellten Aufgabe unter Beibehaltung des Autoklavierens hochkant gestellter Kuchen nach der zweiten Ausführungsform der Erfindung ist nach dem Stand der Technik ebenfalls nicht herleitbar, weil die Probleme, die sich mit Kuchen auf der Basis von Kalkrezepturen im Autoklavprozess ergeben, unbekannt gewesen sind.

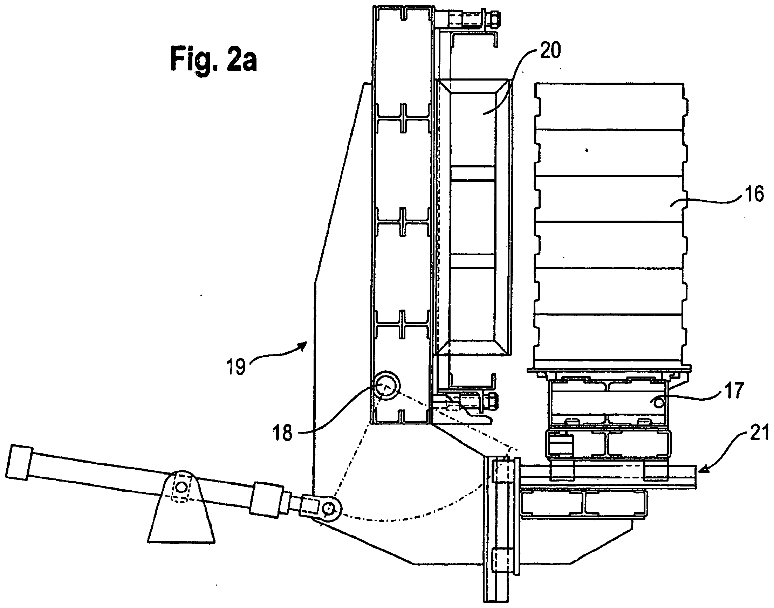

Fig. 2a zeigt die Positionierung eines geschnittenen hochkant auf einer Formenseitenwand stehenden Kuchens, der aus einer nicht dargestellten Schneidanlage gekommen ist. Die Seitenwand 17 lagert auf einer Transportvorrichtung 21. Der Kuchen 16 ist vor einem Härterost 20 positioniert, der von einem um eine horizontale Achse 18 kippbaren Kipptisch 19 gehaltert wird.

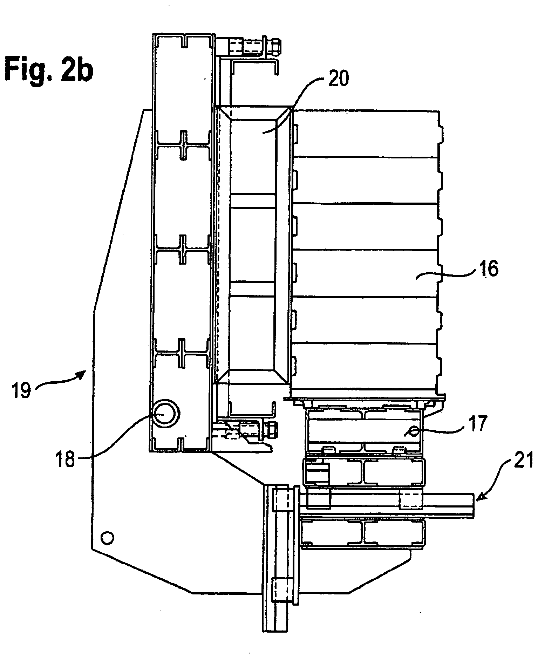

Gemäß Fig. 2b wird der Kuchen 16 mit der Seitenwand 17 und der Transportvorrichtung 21 an den Härterost 20 herangeschoben.

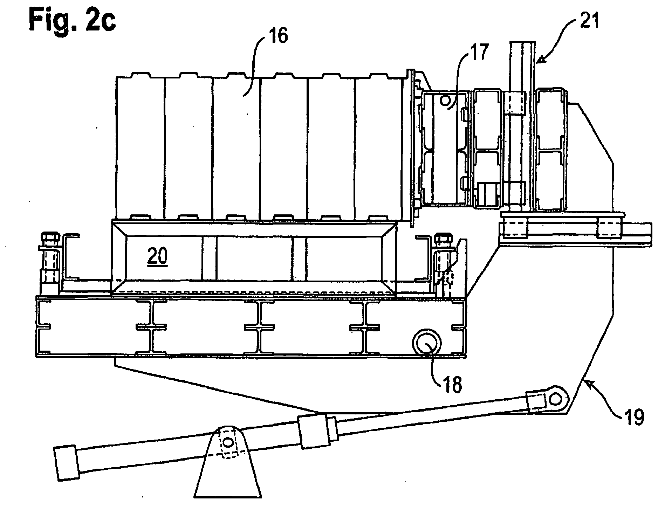

Der Kuchen 16 samt Seitenwand 17 und Transportvorrichtung 21 wird mit dem Kipptisch 19 um die Achse 18 um 90° gekippt und liegt dann mit seiner Breitseite auf dem Härterost 20 (Fig. 2c).

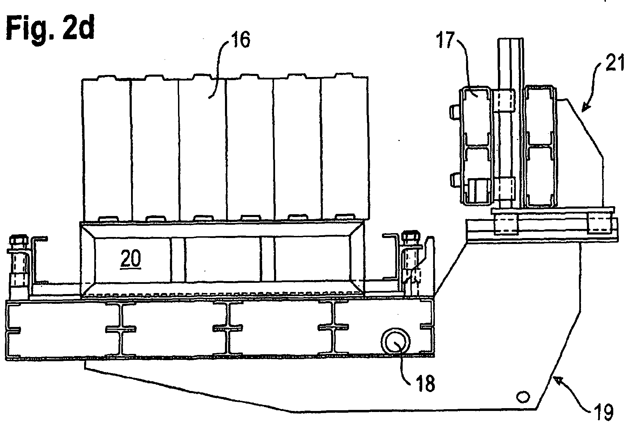

Danach werden die Seitenwand 17 und die Transportvorrichtung 21 vom Kuchen seitlich weggefahren (Fig. 2d).

Der Härterost 20 wird anschließend mit dem Kuchen 16 zu einem Autoklaven 15 befördert, der Kipptisch 19 mit der Seitenwand 17 und der Transportvorrichtung 21 zurückgekippt und die Transportvorrichtung 21 mit der Seitenwand 17 aus der Kippanlage heraus befördert (nicht dargestellt).

## Patentansprüche

1. Verfahren zur hydrothermalen Herstellung von Porenbeton- oder Schaumbetonformkörpern genormter Güteklassen bezüglich der Festigkeit und der Rohdichte nach EN 771-4 und DIN V 4165-100 mit Rohdichten ≤ 450, insbesondere ≤ 400 kg/m³
**gekennzeichnet durch** die Kombination der folgenden Merkmale:
- Es wird eine zement- und sulfatträgerfreie sowie insbesondere auch sulfatfreie Kalkrezeptur aus mindestens einer im Hydrothermalprozess reaktionsfähigen CaO-Komponente aus Branntkalk, insbesondere Weißfeinkalk und/oder hydraulischem Kalk oder deren Hydrate, und mindestens einer im Hydrothermalprozess reaktionsfähigen SiO₂-Komponente, insbesondere in Form von gemahlenem Quarzsand mit Korngrößen bis 0,13 mm, einem sulfatfreien Porenbetonmaterial in Form von Porenbetonmehl und/oder Porenbetonsplitt, sowie einem Treibmittel, in Form von Aluminiumpulver oder Aluminiumpaste, oder vorgefertigtem Schaum hergestellt,
- die Rezepturbestandteile werden in einen Mischer gegeben und mit Wasser zu einer gießfähigen Masse gemischt, wobei der Kalk zu Kalkhydrat ablöscht,
- die wasserhaltige Masse wird in eine großvolumige rechteckige, einen Boden und abnehmbare Seiten- und Stirnwände sowie einen quaderförmigen Innenraum aufweisende Gießform abgefüllt,
- in der Gießform wird die Masse zum porenbildenden Treiben und Ansteifen bei der Herstellung von Porenbeton, bzw. zum Ansteifen bei der Herstellung von Schaumbeton zu einem grünen selbsttragenden und schnittfesten Betonkuchen gebracht,
- die Gießform wird um 90° auf eine ihrer Seitenwände gekippt und der Kuchen durch Entfernen des Bodens der Stirnwände und der anderen Seitenwand entschalt,
- der auf einer seiner Schmalseiten auf der Seitenwand der Gießform hochkant stehende Kuchen wird in einer Sägestation zu mindestens einem Formkörper durch Horizontal- und Vertikalschnitte geschnitten,
- an eine Breitseite des geschnittenen Kuchens wird ein hochkant stehender Härteboden angesetzt und der Härteboden samt Kuchen und Gießformseitenwand mit einer Kippvorrichtung um 90° auf seine Breitseite gekippt, so dass der Kuchen mit seiner Breitseite auf dem Härteboden aufliegt,
- die Gießformseitenwand wird entfernt und der Härteboden mit geschnittenem Betonkuchen in einen Autoklaven verbracht und der Betonkuchen darin autoklaviert,
- nach der Autoklavierung wird das hydrothermal gehärtete Betonmaterial dem Autoklaven entnommen.

2. Verfahren nach Anspruch 1,
**dadurch gekennzeichnet, dass**
als Härteboden ein Härterost verwendet wird.

3. Verfahren nach Anspruch 1 und/oder 2,
**dadurch gekennzeichnet, dass**
als reaktionsfähige SiO₂-Komponente Quarzsand mit Korngrößen bis 0,13 mm verwendet wird.

4. Verfahren nach Anspruch 1,
**dadurch gekennzeichnet, dass**
eine Rezeptur für Porenbeton aus folgenden Bestandteilmengen in Gew.-% bezogen auf den trockenen Feststoffanteil gewählt wird:
| | |
|---|---|
| CaO-Komponente | 15 - 30 |
| SiO₂-Komponente | 55 - 65 |
| inerter Füllstoff | 0 - 20 |
| Porenbetonmehl/ -splitt | 5 - 15 |
| Rohstoffrückschlamm | 15 - 25 |
| Aluminiumkomponente | 1,0 - 1,8 |
| Feinstteilige SiO₂-Zusatzkomponente | 0 - 3 |
| Fließmittel | 0 - 1 |
| Wasserrückhaltemittel | 0 - 1 |

5. Verfahren nach Anspruch 4,
**dadurch gekennzeichnet, dass**
ein Wasser-Feststoff-Verhältnis für die gießfähige Masse zwischen 0,45 und 1,35, insbesondere zwischen 0,48 und 0,63 eingestellt wird.

6. Verfahren nach einem oder mehreren der Ansprüche 1 bis 5,
**dadurch gekennzeichnet, dass**
ein CaO/SiO₂-Molverhältnis der im Hydrothermalprozess reagierenden Komponenten zwischen 0,15 und 0,95, insbesondere zwischen 0,30 und 0,40 eingestellt wird.

7. Verfahren nach einem oder mehreren der Ansprüche 2 bis 6,
**dadurch gekennzeichnet, dass**
als Fließmittel Melaminsulfonate und/oder Ligninsulfonate und/oder Naphthalinsulfonate und/oder Polycarboxylatether verwendet wird.

8. Verfahren nach einem oder mehreren der Ansprüche 2 bis 7,
**dadurch gekennzeichnet, dass**
als Wasserrückhaltemittel Stärke oder Zelluloseether verwendet wird.

9. Verfahren nach einem oder mehreren der Ansprüche 2 bis 8,
**dadurch gekennzeichnet, dass**
als feinstteilige SiO₂-Zusatzkomponente eine synthetische Kieselsäure verwendet wird.

10. Verfahren nach Anspruch 9,
**dadurch gekennzeichnet, dass**
als synthetische Kieselsäure eine pyrogene Kieselsäure und/oder eine Fällungskieselsäure verwendet wird.

11. Verfahren nach Anspruch 9 oder 10,
**dadurch gekennzeichnet, dass**
die synthetische Kieselsäure mit BET-Oberffächen über 10, insbesondere zwischen 20 und 50 m²/g verwendet wird.

12. Verfahren nach einem oder mehreren der Ansprüche 1 bis 11,
**dadurch gekennzeichnet, dass**
beim Gießen und/oder in der Gießform die gießfähige Masse vibriert wird.

13. Verfahren nach einem oder mehreren der Ansprüche 1 bis 12,
**dadurch gekennzeichnet, dass**
der geschnittene Kuchen mit einer Höhe von 0,4 bis 0,8, insbesondere von 0,5 bis 0,7 m erzeugt wird.

14. Verfahren zur hydrothermalen Herstellung von Poren- oder Schaumbetonformkörpern genormter Güteklassen bezüglich der Festigkeit und der Rohdichte nach EN 771-4 und DIN V 4165-100 mit Rohdichten ≤ 450, insbesondere 400 kg/m³,
**gekennzeichnet durch**
die Kombination der folgenden Merkmale:
- es wird eine zement- und sulfatträgerfreie sowie insbesondere auch sulfatfreie Kalkrezeptur aus mindestens einer im Hydrothermalprozess reaktionsfähigen CaO-Komponente aus Branntkalk, insbesondere Weißfeinkalk und/oder hydraulischem Kalk, und mindestens einer im Hydrothermalprozess reaktionsfähigen SiO₂-Komponente, insbesondere in Form von gemahlenem Quarzsand mit Korngrößen bis 0,13 mm, einem sulfatfreien Porenbetonmaterial in Form von Porenbetonmehl und/oder Porenbetonsplitt sowie einem Treibmittel in Form von Aluminiumpulver oder Aluminiumpaste für die Herstellung von Porenbeton oder einem vorgefertigten Schaum für die Herstellung von Schaumbeton, und einer hochdispersen synthetischen Kieselsäure hergestellt,
- die Rezepturbestandteile werden in einen Mischer gegeben und mit Wasser zu einer gießfähigen Masse gemischt, wobei der Branntkalk zu Kalkhydrat ablöscht,
- die wasserhaltige Masse wird in eine großvolumige, rechteckige, einen Boden und abnehmbare Seiten- und Stirnwände sowie einen quaderförmigen Innenraum aufweisende Gießform abgefüllt,
- in der Gießform wird die Masse zum Poren bildenden Treiben und Ansteifen bei der Herstellung von Porenbeton oder zum Ansteifen bei der Herstellung von Schaumbeton zu einem grünen selbsttragenden und schnittfesten Betonkuchen gebracht,
- die Gießform wird um 90° auf eine ihrer Seitenwände gekippt und der Kuchen durch Entfernen des Bodens der Stirnwände und der anderen Seitenwand entschalt,
- der auf einer seiner Schmalseiten auf der Seitenwand der Gießform hochkant stehende Kuchen wird in einer Schneidstation zu mindestens einem Formkörper durch Horizontal- und Vertikalschnitte geschnitten,
- der geschnittene Kuchen wird auf der Seitenwand der Gießform hochkant stehend in einen Autoklaven verbracht und dort autoklaviert,
- nach der Autoklavierung wird das hydrothermal gehärtete Material dem Autoklaven entnommen.

15. Verfahren nach Anspruch 14,
**dadurch gekennzeichnet, dass**
eine Rezeptur aus folgenden Bestandteilmengen in Gew.-% bezogen auf den trockenen Feststoffanteil zur Herstellung von Porenbeton gewählt wird:
| | |
|---|---|
| CaO-Komponente | 15 - 30 |
| SiO₂₋Komponente | 55 - 65 |
| inerter Füllstoff | 0 - 20 |
| Porenbetonmehl/-splitt | 5 - 15 |
| Rohstoffrückschlamm | 15 - 25 |
| Aluminiumkomponente | 1,0 - 1,8 |
| Feinstteilige SiO₂-Zusatzkomponente | 1 - 3 |
| Fließmittel | 0 - 1 |
| Wasserrückhaltemittel | 0 - 1 |

16. Verfahren nach Anspruch 14 und/oder 15,
**dadurch gekennzeichnet, dass**
ein Wasserfeststoff-Verhältnis für die gießfähige Masse zwischen 0,45 und 1,35, insbesondere zwischen 0,48 und 0,63 eingestellt wird.

17. Verfahren nach einem oder mehreren der Ansprüche 14 bis 16,
**dadurch gekennzeichnet, dass**
ein CaO/SiO₂-Molverhältnis der im Hydrothermalprozess reagierenden Komponenten zwischen 0,15 und 0,95, insbesondere zwischen 0,30 und 0,40 eingestellt wird.

18. Verfahren nach einem oder mehreren der Ansprüche 15 bis 17,
**dadurch gekennzeichnet, dass**
als Fließmittel Melaminsulfonate und/oder Ligninsulfonate und/oder Naphthalinsulfonate und/oder Polycarboxylatether verwendet wird.

19. Verfahren nach einem oder mehreren der Ansprüche 15 bis 18,
**dadurch gekennzeichnet, dass**
als Wasserrückhaltemittel Stärke oder Zelluloseether verwendet wird.

20. Verfahren nach einem oder mehreren der Ansprüche 15 bis 19,
**dadurch gekennzeichnet, dass**
als hochdisperse SiO₂-Zusatzkomponente eine synthetische Kieselsäure verwendet wird.

21. Verfahren nach Anspruch 20,
**dadurch gekennzeichnet, dass**
als synthetische Kieselsäure eine pyrogene Kieselsäure und/oder eine Fällungskieselsäure verwendet wird.

22. Verfahren nach einem oder mehreren der Ansprüche 14 bis 21,
**dadurch gekennzeichnet, dass**
beim Gießen und/oder in der Gießform die gießfähige Masse vibriert wird.

23. Verfahren nach einem oder mehreren der Ansprüche 14 bis 22,
**dadurch gekennzeichnet, dass**
der geschnittene Kuchen mit einer Höhe von 1 bis 1,5, insbesondere von 1,1 bis 1,25 m erzeugt wird.

## Claims

1. A method for the hydrothermal production of autoclaved aerated concrete shaped bodies or foamed concrete shaped bodies of standardised quality classes in terms of strength and bulk density according to EN 771-4 and DIN V 4165-100, having bulk densities ≤ 450, in particular ≤ 400 kg/m³,
**characterised by** the combination of the following characteristics:
- a lime formulation that is cement-free and sulfate-carrier-free and, in particular, also sulfate-free, composed of at least one CaO component which is capable of reaction in a hydrothermal process, composed of quicklime, in particular white fine lime and/or hydraulic lime or their hydrates, and at least one SiO₂ component which is capable of reaction in a hydrothermal process, in particular in the form of ground quartz sand having grain sizes of up to 0.13 mm, a sulfate-free autoclaved aerated concrete material in the form of autoclaved aerated concrete meal and/or autoclaved aerated concrete split as well as a blowing agent in the form of aluminium powder or aluminium paste, or previously produced foam, is produced,
- the formulation components are placed into a mixer and mixed with water to form a pourable mass, the lime quenching to form lime hydrate,
- the water-containing mass is filled into a large-volume, rectangular casting mould that has a base and removable side and face walls as well as a cuboid interior,
- in the casting mould, the mass is brought to pore-forming expansion and stiffening in the production of autoclaved aerated concrete, or to stiffening in the production of foamed concrete, to form a green, self-supporting concrete cake which is firm when cut,
- the casting mould is tipped by 90°, on to one of its side walls, and the cake is demoulded by removing the base, the face walls and the other side wall,
- the cake, standing upright on one of its narrow sides on the side wall of the casting mould, is cut in a sawing station to form at least one shaped body by means of horizontal and vertical cuts,
- a hardening base standing upright is set on to one broad side of the cut cake, and the hardening base, together with cake and casting mould side wall, is tipped by 90° on to its broad side by a tipping device so that the cake comes to lie with its broad side on the hardening base,
- the casting mould side wall is removed and the hardening base with the cut concrete cake is placed into an autoclave and the concrete cake is autoclaved therein,
- after autoclaving, the hydrothermally hardened concrete material is removed from the autoclave.

2. The method according to claim 1,
**characterised in that**
a hardening frame is used as the hardening base.

3. The method according to claim 1 and/or 2,
**characterised in that**
quartz sand with grain sizes of up to 0.13 mm is used as the reactive SiO₂ component.

4. The method according to claim 1,
**characterised in that**
a formulation for autoclaved aerated concrete is selected from the following component quantities in wt.%, based on the dry solids content:
| | |
|---|---|
| CaO component | 15-30 |
| SiO₂ component | 55 - 65 |
| Inert filler | 0-20 |
| Autoclaved aerated concrete meal/chippings | 5-15 |
| Bulk material return slurry | 15-25 |
| Aluminium component | 1.0 - 1.8 |
| Extremely fine-particle SiO₂ additional component | 0-3 |
| Flow agents | 0 - 1 |
| Water retention agents | 0-1 |

5. The method according to claim 4,
**characterised in that**
a water/solids ratio of between 0.45 and 1.35, in particular between 0.48 and 0.63, is established for the pourable mass.

6. The method according to one or more of claims 1 to 5,
**characterised in that**
a CaO/SiO₂ molar ratio of the components that react in the hydrothermal process of between 0.15 and 0.95, in particular between 0.30 and 0.40, is established.

7. The method according to one or more of claims 2 to 6,
**characterised in that**
melamine sulfonates and/or lignin sulfonates and/or naphthalene sulfonates and/or polycarboxylate ethers are used as a flow agent.

8. The method according to one or more of claims 2 to 7,
**characterised in that**
starch or cellulose ether is used as a water retention agent.

9. The method according to one or more of claims 2 to 8,
**characterised in that**
a synthetic silica is used as an extremely fine-particle SiO₂ additional component.

10. The method according to claim 9,
**characterised in that**
a pyrogenic silica and/or a precipitated silica is used as a synthetic silica.

11. The method according to claim 9 or 10,
**characterised in that**
the synthetic silica is used with BET surface areas greater than 10, in particular between 20 and 50 m²/g.

12. The method according to one or more of claims 1 to 11,
**characterised in that**
the pourable mass is vibrated during pouring and/or in the casting mould.

13. The method according to one or more of claims 1 to 12,
**characterised in that**
the cut cake is produced with a height of 0.4 to 0.8, in particular of 0.5 to 0.7 m.

14. A method for the hydrothermal production of autoclaved aerated or foamed concrete shaped bodies of standardised quality classes in terms of strength and bulk density according to EN 771-4 and DIN V 4165-100, having bulk densities ≤ 450, in particular ≤ 400 kg/m³,
**characterised by** the combination of the following characteristics:
- a lime formulation that is cement-free and sulfate-carrier-free, and, in particular, also sulfate-free, composed of at least one CaO component which is capable of reaction in a hydrothermal process, composed of quicklime, in particular white fine lime and/or hydraulic lime, and at least one SiO₂ component which is capable of reaction in a hydrothermal process, in particular in the form of ground quartz sand having grain sizes of up to 0.13 mm, a sulfate-free autoclaved aerated concrete material in the form of autoclaved aerated concrete meal and/or autoclaved aerated concrete split as well as a blowing agent in the form of aluminium powder or aluminium paste for the production of autoclaved aerated concrete or a previously produced foam for the production of foamed concrete, and a highly disperse synthetic silica, is produced,
- the formulation components are placed into a mixer and mixed with water to form a pourable mass, the quicklime quenching to form lime hydrate,
- the water-containing mass is filled into a large-volume, rectangular casting mould that has a base and removable side and face walls, as well as a cuboid interior,
- in the casting mould, the mass is brought to pore-forming expansion and stiffening in the production of autoclaved aerated concrete, or to stiffening in the production of foamed concrete, to form a green, self-supporting concrete cake which is firm when cut,
- the casting mould is tipped by 90° on to one of its side walls, and the cake is demoulded by removing the base, the face walls and the other side wall,
- the cake, standing upright on one of its narrow sides on the side wall of the casting mould, is cut in a sawing station to form at least one shaped body by means of horizontal and vertical cuts,
- the cut cake, standing upright on the side wall of the casting mould, is placed into an autoclave and is autoclaved there,
- after autoclaving, the hydrothermally hardened material is removed from the autoclave.

15. The method according to claim 14,
**characterised in that**
a formulation for the production of autoclaved aerated concrete is selected from the following component quantities in weight percent, based on the dry solids content:
| | |
|---|---|
| | |
| CaO component | 15 - 30 |
| SiO₂ component | 55 - 65 |
| Inert filler | 0-20 |
| Autoclaved aerated concrete meal/chippings | 5-15 |
| Bulk material return slurry | 15-25 |
| Aluminium component | 1.0 - 1.8 |
| Extremely fine-particle SiO₂ additional component | 1-3 |
| Flow agents | 0-1 |
| Water retention agents | 0-1 |

16. The method according to claim 14 and/or 15,
**characterised in that**
a water/solids ratio of between 0.45 and 1.35, in particular between 0.48 and 0.63, is established for the pourable mass.

17. The method according to one or more of claims 14 to 16,
**characterised in that**
a CaO/SiO₂ molar ratio of the components that react in the hydrothermal process of between 0.15 and 0.95, in particular between 0.30 and 0.40, is established.

18. The method according to one or more of claims 15 to 17,
**characterised in that**
melamine sulfonates and/or lignin sulfonates and/or naphthalene sulfonates and/or polycarboxylate ethers are used as flow agents.

19. The method according to one or more of claims 15 to 18,
**characterised in that**
starch or cellulose ether is used as a water retention agent.

20. The method according to one or more of claims 15 to 19,
**characterised in that**
a synthetic silica is used as a highly dispersed SiO₂ additional component.

21. The method according to claim 20,
**characterised in that**
a pyrogenic silica and/or a precipitated silica is used as a synthetic silica.

22. The method according to one or more of claims 14 to 21,
**characterised in that**
the pourable mass is vibrated during pouring and/or in the casting mould.

23. The method according to one or more of claims 14 to 22,
**characterised in that**
the cut cake is produced with a height of 1 to 1.5, in particular of 1.1 to 1.25 m.

## Revendications

1. Procédé de fabrication hydrothermique de corps moulés en béton poreux ou béton mousse de catégories normalisées en ce qui concerne la résistance et la densité apparente selon les normes EN 771-4 et DIN V 4165-100 avec des densités apparentes ≤ 450, en particulier ≤ 400 kg/m³
**caractérisé par** la combinaison des caractéristiques suivantes :
- on produit une préparation de chaux sans support de ciment ou de sulfate et en particulier également sans sulfate à partir d'au moins un composant CaO pouvant réagir dans un processus hydrothermique de chaux vive, en particulier de chaux blanche finement broyée et/ou de chaux hydraulique ou leurs hydrates, et au moins un composant de SiO₂ pouvant réagir dans un processus hydrothermique, en particulier sous la forme de sable broyé présentant une taille de grain allant jusqu'à 0,13 mm, un matériau de béton poreux sans sulfate sous forme de farine de béton poreux et/ou de gravillon de béton poreux et un agent moussant sous forme de poudre d'aluminium ou de pâte d'aluminium ou d'une mousse préfabriquée,
- les composants de la préparation sont placés dans un mélangeur et mélangés avec de l'eau pour donner une masse pouvant être coulée, dans laquelle la chaux est éteinte en chaux hydratée,
- la masse contenant de l'eau est versée dans un moule rectangulaire de grand volume présentant un sol et des parois latérales et frontales amovibles et un espace intérieur parallélépipédique,
- dans le moule, la masse développe des pores et est mise à durcir lors de la fabrication de béton poreux ou mise à durcir lors de la fabrication de béton mousse pour donner un gâteau de béton brut autoportant et résistant à la coupe,
- le moule est retourné à 90° sur l'une de ses parois latérales et le gâteau est démoulé par retrait du sol, des parois frontales et de l'autre paroi latérale,
- le gâteau, se tenant verticalement sur l'une de ses faces étroites sur la paroi latérale du moule, est coupé dans un poste de sciage en au moins un corps moulé par coupes horizontales et verticales,
- sur une face large du gâteau coupé, on place une plateforme orientée verticalement et la plateforme avec le gâteau et la paroi latérale du moule est basculée à l'aide d'un dispositif de basculement, à 90° sur sa face large de sorte que le gâteau repose sur sa face large sur la plateforme,
- la paroi latérale du moule est retirée et la plateforme avec le gâteau de béton coupé est acheminée dans un autoclave et le gâteau de béton y est autoclavé,
- après l'autoclavage, le matériau de béton durci de façon hydrothermique est retiré de l'autoclave.

2. Procédé selon la revendication 1,
**caractérisé en ce que** l'on utilise une grille comme plateforme.

3. Procédé selon la revendication 1 et/ou 2,
**caractérisé en ce que** l'on utilise comme composant réactionnel de SiO₂, du sable présentant une taille de grains allant jusqu'à 0,13 mm.

4. Procédé selon la revendication 1,
**caractérisé en ce que** l'on choisit une préparation de béton poreux parmi les quantités de composants suivantes en % en poids par rapport à la proportion de solides secs :
| | |
|---|---|
| Composants CaO | 15 à 30 |
| Composants SiO₂ | 55 à 65 |
| Agent de charge inerte | 0 à 20 |
| Farine/gravier de béton poreux | 5 à 15 |
| Boue recyclée | 15 à 25 |
| Composants aluminium | 1,0 à 1,8 |
| Composants additif SiO₂ à fines particules | 0 à 3 |
| Agent d'écoulement | 0 à 1 |
| Agent de rétention d'eau | 0 à 1 |

5. Procédé selon la revendication 4,
**caractérisé en ce qu'**un rapport eau - solide pour la masse pouvant être coulée est ajusté entre 0,45 et 1,35, en particulier entre 0,48 et 0,63.

6. Procédé selon une ou plusieurs des revendications 1 à 5, **caractérisé en ce qu'**un rapport molaire de CaO/SiO₂ des composants réagissant dans le processus hydrothermique est ajusté entre 0,15 et 0,95, en particulier entre 0,30 et 0,40.

7. Procédé selon une ou plusieurs des revendications 2 à 6, **caractérisé en ce que** l'on utilise comme agent d'écoulement, des sulfonates de mélamine et/ou des sulfonates de lignine et/ou des sulfonates de naphtaline et/ou des éthers de polycarboxylate.

8. Procédé selon une ou plusieurs des revendications 2 à 7, **caractérisé en ce que** l'on utilise comme agent de rétention d'eau des amidons ou des éthers de cellulose.

9. Procédé selon une ou plusieurs des revendications 2 à 8, **caractérisé en ce que** l'on utilise comme composants additifs de SiO₂ à fines particules, un acide silicique synthétique.

10. Procédé selon la revendication 9,
**caractérisé en ce que** l'on utilise comme acide silicique synthétique, un acide silicique pyrogène et/ou un acide silicique de précipitation.

11. Procédé selon la revendication 9 ou 10,
**caractérisé en ce que** l'on utilise l'acide silicique synthétique avec des surfaces BET supérieures à 10, en particulier entre 20 et 50 m²/g.

12. Procédé selon une ou plusieurs des revendications 1 à 11,
**caractérisé en ce que**, lors du coulage et/ou dans le moule, la masse pouvant être coulée est soumise à des vibrations.

13. Procédé selon une ou plusieurs des revendications 1 à 12,
**caractérisé en ce que** le gâteau coupé est produit avec une hauteur de 0,4 à 0,8, en particulier de 0,5 à 0,7 m.

14. Procédé de fabrication hydrothermique de corps moulés en béton poreux ou béton mousse de catégories normalisées en ce qui concerne la résistance et la densité apparente selon les normes EN 771-4 et DIN V 4165-100 avec des densités apparentes ≤ 450, en particulier ≤ 400 kg/m³
**caractérisé par** la combinaison des caractéristiques suivantes :
- on produit une préparation de chaux sans support de ciment ou de sulfate et en particulier également sans sulfate à partir d'au moins un composant CaO pouvant réagir dans un processus hydrothermique de chaux vive, en particulier de chaux blanche finement broyée et/ou de chaux hydraulique, et au moins un composant de SiO₂ pouvant réagir dans un processus hydrothermique, en particulier sous la forme de sable broyé présentant une taille de grain allant jusqu'à 0,13 mm, un matériau de béton poreux sans sulfate sous forme de farine de béton poreux et/ou de gravillon de béton poreux et un agent moussant sous forme de poudre d'aluminium ou de pâte d'aluminium pour la production de béton poreux ou d'une mousse préfabriquée pour la production de béton mousse, et d'un acide silicique synthétique hautement dispersé,
- les composants de la préparation sont placés dans un mélangeur et mélangés avec de l'eau pour donner une masse pouvant être coulée, dans laquelle la chaux est éteinte en chaux hydratée,
- la masse contenant de l'eau est versée dans un moule rectangulaire de grand volume présentant un sol et des parois latérales et frontales amovibles et un espace intérieur parallélépipédique,
- dans le moule, la masse développe des pores et est mise à durcir lors de la fabrication de béton poreux ou mise à durcir lors de la fabrication de béton mousse pour donner un gâteau de béton brut autoportant et résistant à la coupe,
- le moule est retourné à 90° sur l'une de ses parois latérales et le gâteau est démoulé par retrait du sol, des parois frontales et de l'autre paroi latérale,
- le gâteau, se tenant verticalement sur l'une de ses faces étroites sur la paroi latérale du moule, est coupé dans un poste de sciage en au moins un corps moulé par coupes horizontales et verticales,
- le gâteau coupé est acheminé dans un autoclave verticalement sur la paroi latérale du moule et y est autoclavé,
- après l'autoclavage, le matériau de béton durci de façon hydrothermique est retiré de l'autoclave.

15. Procédé selon la revendication 14,
**caractérisé en ce que** l'on choisit une préparation de quantités de composants suivantes en % en poids par rapport à la proportion de solides secs pour la production de béton poreux :
| | |
|---|---|
| Composants CaO | 15 à 30 |
| Composants SiO₂ | 55 à 65 |
| Agent de charge inerte | 0 à 20 |
| Farine/gravier de béton poreux | 5 à 15 |
| Boue recyclée | 15 à 25 |
| Composants aluminium | 1,0 à 1,8 |
| Composants additif SiO₂ à fines particules | 1 à 3 |
| Agent d'écoulement | 0 à 1 |
| Agent de rétention d'eau | 0 à 1 |

16. Procédé selon la revendication 14 et/ou 15,
**caractérisé en ce qu'**un rapport eau - solide pour la masse pouvant être coulée est ajusté entre 0,45 et 1,35, en particulier entre 0,48 et 0,63.

17. Procédé selon une ou plusieurs des revendications 16 à 16, **caractérisé en ce qu'**un rapport molaire de CaO/SiO₂ des composants réagissant dans le processus hydrothermique est ajusté entre 0,15 et 0,95, en particulier entre 0,30 et 0,40.

18. Procédé selon une ou plusieurs des revendications 15 à 17, **caractérisé en ce que** l'on utilise comme agent d'écoulement, des sulfonates de mélamine et/ou des sulfonates de lignine et/ou des sulfonates de naphtaline et/ou des éthers de polycarboxylate.

19. Procédé selon une ou plusieurs des revendications 15 à 18, **caractérisé en ce que** l'on utilise comme agent de rétention d'eau, des amidons ou des éthers de cellulose.

20. Procédé selon une ou plusieurs des revendications 15 à 19, **caractérisé en ce que** l'on utilise comme composants additifs de SiO₂ hautement dispersés, un acide silicique synthétique.

21. Procédé selon la revendication 20,
**caractérisé en ce que** l'on utilise comme acide silicique synthétique, un acide silicique pyrogène et/ou un acide silicique de précipitation.

22. Procédé selon une ou plusieurs des revendications 14 à 21,
**caractérisé en ce que**, lors du coulage et/ou dans le moule, la masse pouvant être coulée est soumise à des vibrations.

23. Procédé selon une ou plusieurs des revendications 14 à 22,
**caractérisé en ce que** le gâteau coupé est produit avec une hauteur de 1 à 1,5, en particulier de 1,1 à 1,25 m.
